Europäisches Patentamt

European Patent Office

Office européen des brevets

(11) Veröffentlichungsnummer: **0 114 606**
**A2**

# (12) EUROPÄISCHE PATENTANMELDUNG

(21) Anmeldenummer: **84100143.1**

(22) Anmeldetag: **09.01.84**

(51) Int. Cl.³: **B 61 D 25/00**
**B 60 J 1/10**

(30) Priorität: **19.01.83 AT 161/83**

(43) Veröffentlichungstag der Anmeldung:
**01.08.84 Patentblatt 84/31**

(84) Benannte Vertragsstaaten:
**DE FR NL SE**

(71) Anmelder: **Vereinigte Metallwerke Ranshofen-Berndorf AG**

**A-5282 Braunau am Inn(AT)**

(72) Erfinder: **Hauer, Kurt**
**Schelleingasse 9-11/1/4**
**A-1040 Wien(AT)**

(72) Erfinder: **Trimmel, Engelbert, Dipl.-Ing.**
**Margaretenstrasse 150/4**
**A-1050 Wien(AT)**

(74) Vertreter: **Hain, Leonhard, Dipl.-Ing.**
**Tal 18/IV**
**D-8000 München 2(DE)**

(54) **Befestigung für Fensterrahmen in Blechwänden.**

(57) Zur Befestigung eines Fensterrahmens (1) in einer Blechwand (7), insbesondere von Fahrzeugen, umgreift ein Spreizkeilband (6) den Rand der Blechwand und sichert den Fensterrahmen (1) gegen herausfallen. Zur Erhöhung dieser 'Sicherheit und Verstärkung der Abdichtung weist das Spreizkeilband (6) an seiner dem Fensterrahmen (1) zugewandten Seite eine nach außen abstehende Nasenrippe (3) auf, die widerhakenartig in eine angepaßte Nut (2) des Fensterrahmens (1) eingreift.

EP 0 114 606 A2

Croydon Printing Company Ltd.

DIPL. ING. LEONH. HAIN
PATENTANWALT
8 MÜNCHEN 2
TAL 18 - T. 29 47 98

Anmelder: Vereinigte Metallwerke Ranshofen-Berndorf AG
          A - 5282 Braunau am Inn

Titel:    Befestigung für Fensterrahmen in Blechwänden

Beschreibung

Die Erfindung betrifft eine Befestigung für Fensterrahmen in Blechwänden, insbesondere von Fahrzeugen mit einem elastischen Spreizkeilbandprofil, welches den Blechrand umgreift und damit gegen Herausfallen gesichert ist.

Beim Einbau von Fensterrahmen in Waggonwände sind bisher komplizierte Befestigungsmethoden verwendet worden, die entweder geteilte Rahmen oder eine Vielzahl von Niet- und Schraubverbindungen verwenden, daher sehr arbeitsaufwendig sind und genaue Toleranzen verlangen, da andernfalls viel Nacharbeit erforderlich wird. Auch ein Austauschen der durch Alterungserscheinungen versprödeten Dichtungen ist nur mit größtem Aufwand möglich.

Der Erfindung liegt die Aufgabe zugrunde, eine Befestigung für Fensterrahmen zu schaffen, die besonders einfach im Aufbau, sicher gegen auftretende Kräfte und vor allem auch dicht ist.

Diese Aufgabe wird mit einer Rahmenbefestigung der eingangs genannten Art erfindungsgemäß dadurch gelöst, daß das Spreizkeilband an seiner dem Fensterrahmen zugewandten Seite eine schräg nach außen vorstehende Nasenrippe aufweist, welche widerhakenartig in eine entsprechend geformte Nut des Fensterrahmens eingreift.

Weitere Merkmale der Erfindung sind in Unteransprüchen
beansprucht.

Die Erfindung wird nachfolgend anhand eines Ausführungsbeispiels, das auch in einer Detailschnittzeichnung dargestellt ist, näher beschrieben.

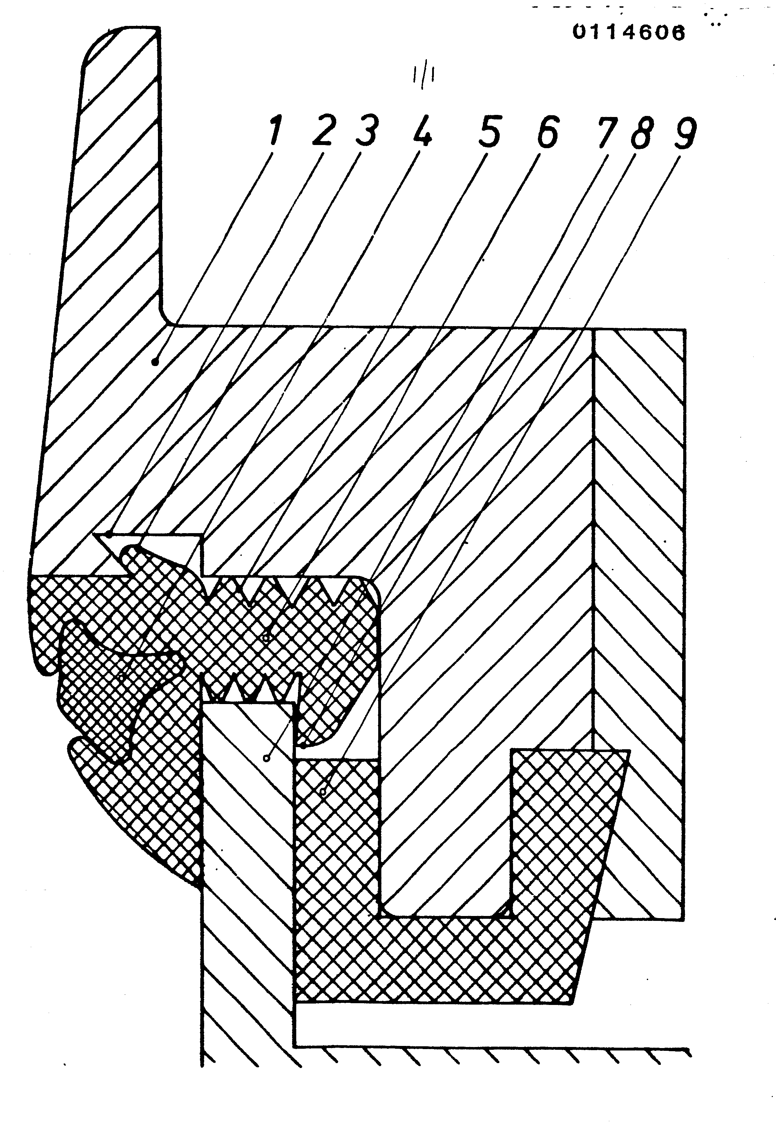

Wie die Zeichnung zeigt, ist ein Waggonfensterrahmen 1
in eine aus Blech bestehende Waggonwand 7 unter Zwischenlage eines aus Elastomermaterial, wie Gummi oder Kunststoff, bestehenden Spreizkeilbandes 6 eingebaut, wobei
das Spreizkeilband 6 nach dem Einsetzen durch ein Spreizkeilprofil 4 gespreizt und damit in seiner Form versteift ist. Das Band 6 liegt außen mit einer Lippe an der
Blechwand 7 an und durchsetzt den Raum zwischen Blechwand 7 und Fensterrahmenprofil 1, wobei es mit einer
Lippe 8 die Blechwand 7 auf der Innenseite umfaßt und
damit gegen Herausziehen gesichert ist. Zur Abdichtung
zwischen Blechwand 7 und Fensterrahmenprofil 1 dient
ferner noch eine Dichtung 9 auf der Innenseite der
Blechwand 7.

Um ein Eindrücken des Fensters nach innen, etwa durch den
Luftdruck bei der Begegnung zweier Züge, zu vermeiden,
besitzt das Spreizkeilband 6 an seiner dem Fensterrahmen
1 zugewandten Seite eine schräg nach außen stehende Nasenrippe 3, welche in eine Nut 2 des Fensterrahmens 1 eingreift, die so gestaltet ist, daß durch eine Widerhakenverrastung ein Einwärtsschieben des Fensterrahmens verhindert wird. Um beim Einbau ein Einrasten der Nasenrippe
3 in die Nut 2 zu ermöglichen, muß das Spreizkeilband 6
nach einwärts gedrückt werden. Zur Erhöhung seiner Kompressibilität und zum Ausgleich von Toleranzungenauigkeiten weist es in seinem Mittelteil zwischen Fensterrahmenprofil 1 und Blechwand 7 Harmonikarippen 5 auf.

Die dargestellte Verbindung ist nach dem Einrasten nicht nur dicht, sondern kann auch alle notwendigen Kräfte aufnehmen. Um auch bei späterer altersbedingter Versprödung eine Sicherheit zu gewährleisten, wird der Fensterrahmen noch durch nicht dargestellte mechanische Halterungen mit der Waggonwand 7 verbunden.

Patentansprüche

1. Befestigung für Fensterrahmen in Blechwänden, insbesondere von Fahrzeugen, mit einem elastischen Spreizkeilbandprofil, welches den Blechrand umgreift und damit den Rahmen gegen Herausfallen sichert, dadurch gekennzeichnet, daß das Spreizkeilband (6) an seiner dem Fensterrahmen (1) zugewandten Seite eine schräg nach außen vorstehende Nasenrippe (3) aufweist, welche widerhakenartig in eine entsprechend geformte Nut (2) des Fensterrahmens (1) eingreift.

2. Befestigung nach Anspruch 1, dadurch gekennzeichnet, daß der Fensterrahmen (1) mit seinem Winkelprofil die Blechwand (7) auf der Innenseite mit Abstand übergreift und das Spreizkeilband (6) diesen Raum mit einer hinter die Blechwand (7) einhakenden Anschlagrippe (8) ausfüllt.

3. Befestigung nach Anspruch 1 oder 2, dadurch gekennzeichnet, daß das Spreizkeilband (6) im Bereich der Blechwand (7) Harmonikarippen (5) aufweist.